# EUROPEAN PATENT APPLICATION

(11) **EP 4 297 364 A1**
(43) Date of publication of application: **27.12.2023**
(21) Application number: 23180379.2
(22) Date of filing: 20.06.2023
(51) Int. Cl.: H04L 45/24, H04L 45/50, H04L 45/58, H04L 45/02

(54) **MULTI-CHASSIS ACCESS PROTECTION METHOD AND APPARATUS FOR PBB-EVPN SERVICE**

(30) Priority: 21.06.2022 CN 202210709406
(71) Applicant: Nokia Shanghai Bell Co., Ltd., Shanghai 201206 (CN)
(72) Inventor: ZHANG, Li Xin, Shanghai, 200433 (CN)
(74) Representative: DREISS Patentanwälte PartG mbB

(57) **Abstract**

Embodiments of the present disclosure provide a multi-chassis access protection method and device for a PBB-EVPN service. The method comprises: configuring a multi-chassis redundancy access mode for a PBB-EVPN service; wherein the multi-chassis redundancy access mode is applicable to a scenario where a CE device is multihomed to two or more access node (AN) devices of a cloud central office (CloudCO) via a multi-chassis link aggregation group (CE-LAG) and the two or more AN devices are respectively dualhomed to a same pair of redundant PE devices (a first PE). The embodiment of the present disclosure has the following advantages: providing a multihoming connection redundancy protection mode suitable for a PBB-EVPN service of the cloud central office; and providing a signaling mode and EVPN route encoding involved in a multihoming connection redundancy protection mode for supporting a PBB-EVPN service.

## Description

### FIELD

The present disclosure relates to the technical field of communication, in particular to a multi-chassis access protection method and apparatus for a Provider Backbone Bridging combined with Ethernet Virtual Private Network (PBB-EVPN) service.

### BACKGROUND

In the cloud central office (CloudCO, see Broadband Forum Technical Report 384), an Access Node (AN) device is connected to a broadband network gateway or a service gateway device through the Ethernet overlay network provided by a Provider Edge (PE) router of a Point of Delivery (POD).

The Ethernet Virtual Private Network (EVPN) is a Virtual Private Network (VPN) solution for the next generation full-service bearer. The EVPN unifies control planes of various VPN services, and uses a Border Gateway Protocol (BGP) extended protocol to transmit reachability information of Layer 2 or Layer 3, thus realizing separation of a forwarding plane and a control plane. For example, the EVPN or the PBB-EVPN services can be deployed as Ethernet overlay network services. However, how to better combine EVPN technology with emerging scenes (for example, the scene of cloud central office) is still a problem that needs to be studied.

### SUMMARY

Embodiments of the present disclosure provide a method, device, apparatus, device, and computer-readable medium for applying PBB-EVPN technology to the cloud central office (CloudCO) scenario.

In a first aspect of the present disclosure, there is provided a multi-chassis redundancy access protection method for a PBB-EVPN service. The method comprises: configuring a multi-chassis redundancy access mode for a PBB-EVPN service; wherein the multi-chassis redundancy access mode is applicable to a scenario where a customer edge (CE) device is multihomed to two or more access node (AN) devices of a cloud central office (CloudCO) via a multi-chassis link aggregation group (CE-LAG) and the two or more AN devices are respectively dualhomed to a same pair of redundant provider edge (PE) devices (a first PE).

In a second aspect of the present disclosure, there is provided a method of explicitly indicating a MAC address type advertised by an EVPN route, wherein the method comprises newly defining an EVPN MAC Address Type Extended Community. In the multi-chassis redundancy access mode of the PBB-EVPN service as claimed in the first aspect of the present disclosure, traffic of the CE-LAG is evenly carried on all relevant PE-AN Ethernet links via a group of dedicated Ethernet virtual circuits which constitute a virtual Ethernet segment carrying traffic of the CE-LAG The CE-LAG and a virtual Ethernet segment thereof are identified by a B-MAC address (a CE-LAG B-MAC address). The EVPN MAC Address Type Extended Community is used for precisely indicating a remote PE (a second PE) device to process the traffic of the CE-LAG using the multi-chassis redundancy access protection method for a PBB-EVPN service as claimed in the first aspect of the present disclosure.

In a third aspect of the present disclosure, there is provided a multi-chassis access protection apparatus for a PBB-EVPN service. The apparatus comprises: an apparatus for configuring a multi-chassis redundancy access mode for a PBB-EVPN service; wherein the multi-chassis redundancy access mode is applicable to a scenario where a CE device is multihomed to two or more access node (AN) devices of a cloud central office (CloudCO) via a multi-chassis link aggregation group (CE-LAG) and the two or more AN devices are respectively dualhomed to a same pair of redundant PE devices.

In a fourth aspect of the present disclosure, there is provided a PE device for multi-chassis access protection for a PBB-EVPN service, wherein the PE device comprises a processor and a memory, and the memory stores a computer program, and when the computer program is executed by the processor, the following steps are implemented: configuring a multi-chassis redundancy access mode for a PBB-EVPN service; wherein the multi-chassis redundancy access mode is applicable to a scenario where a CE device is multihomed to two or more access node (AN) devices of a cloud central office (CloudCO) via a multi-chassis link aggregation group (CE-LAG) and the two or more AN devices are respectively dualhomed to the same pair of redundant PE devices.

In a fifth aspect of the present disclosure, there is provided a computer-readable storage medium in which a computer program is stored, and the computer program is used for a PE device for multi-chassis access protection for a PBB-EVPN service; when the computer program is executed by a PE device, the following steps are implemented: configuring a multi-chassis redundancy access mode for a PBB-EVPN service; wherein the multi-chassis redundancy access mode is applicable to a scenario where a CE device is multihomed to two or more access node (AN) devices of a cloud central office (CloudCO) via a multi-chassis link aggregation group (CE-LAG) and the two or more AN devices are respectively dualhomed to a same pair of redundant PE devices (a first PE).

This Summary is not intended to identify key features or essential features of the present disclosure, nor is it intended to be used to limit the scope of the present disclosure. Other features of the present disclosure will become readily apparent from the following description.

### BRIEF DESCRIPTION OF THE DRAWINGS

Through the following detailed description with reference to the accompanying drawings, the above and other objectives, features, and advantages of example embodiments of the present disclosure will become more apparent.
FIG. 1 illustrates a schematic diagram of an example communication environment in which embodiments of the present disclosure may be implemented.
FIG. 2 illustrates a schematic diagram of an EVPN MAC Address Type Extended Community according to an embodiment of the present disclosure.
FIG. 3 illustrates a flow diagram of a multi-chassis redundancy access protection method for a PBB-EVPN service according to an embodiment of the present application.
FIG. 4 illustrates a schematic structural diagram of multi-chassis redundancy access protection apparatus for a PBB-EVPN service according to an embodiment of the present application.
FIG. 5 illustrates a communication method implemented at a redundancy group (RG) PE device according to an embodiment of the present disclosure.
FIG. 6 illustrates a communication method implemented at a remote PE device in accordance with an embodiment of the present disclosure.
FIG. 7 illustrates a simplified block diagram of a device suitable for implementing an embodiment of the present disclosure.
FIG. 8 illustrates a schematic diagram of a computer-readable medium suitable for implementing an embodiment of the present disclosure.

In the various figures, the same or corresponding reference signs indicate the same or corresponding components.

### DETAILED DESCRIPTION OF EMBODIMENTS

In the present disclosure, some exemplary embodiments are described as processes or methods depicted as flowcharts. Although a flowchart may describe the operations as a sequential process, many operations can be performed in parallel, concurrently, or concurrently. Further, the operations may be reordered. The process may be terminated when its operations are completed, but may also have additional steps not included in the figures. A process may correspond to a method, a function, a procedure, a subroutine, a subprogram, etc.

The methods discussed later, some of which are illustrated by flowcharts, can be implemented by hardware, software, firmware, middleware, microcode, hardware description languages, or any combination thereof. When implemented in software, firmware, middleware or microcode, the program code or code segments to perform the necessary tasks may be stored in a machine or computer readable medium, such as a storage medium. The processor (s) may perform the necessary tasks.

The specific structural and functional details disclosed herein are merely representative and are for the purpose of describing exemplary embodiments of the disclosure. The present disclosure may, however, be embodied in many alternate forms and should not be construed as limited to the embodiments set forth herein.

As used herein, the term "includes" and its variants are to be read as open-ended terms that mean "includes, but is not limited to." The term "based on" is to be read as "based at least in part on." The terms "one example embodiment" and "one embodiment" are to be read as "at least one example embodiment." The terms "first", "second" and so on can refer to same or different objects. The following text also can include other explicit and implicit definitions.

As used herein, the term "determining" encompasses a variety of actions. For example, "determining" can include computing, calculating, processing, deriving, investigating, looking up (e.g., looking up in a table, database, or another data structure), ascertaining, and the like. Further, "determining" can include receiving (e.g., receiving information), accessing (e.g., accessing data in memory), etc. Further, "determining" can include parsing, selecting, choosing, establishing, etc.

As used herein, the term "circuit" refers to one or more of the following: (a) hardware circuit only implementations (such as analog and/or digital circuit only implementations); and (b) a combination of hardware circuit and software, such as, if applicable: (i) a combination of analog and/or digital hardware circuit and software/firmware, and (ii) any portion of a hardware processor and software (including a digital signal processor, software, and memory that work together to cause an apparatus such as an optical line terminal (OLT) or other computing device to perform various functions); and (c) a hardware circuit and/or processor, such as a microprocessor or a portion of a microprocessor, that requires software (e.g., firmware) for operation, but may be absent when software is not required for operation.

The definition of circuit applies to all usage scenarios of this term in this application, including any claims. As another example, the term "circuit" as used herein also covers an implementation of only a hardware circuit or processor (or processors), or a portion of a hardware circuit or processor, or accompanying software or firmware. For example, the term "circuit" also covers baseband integrated circuits or processor integrated circuits or similar integrated circuits in other computing devices, if applicable to particular claims.

It should be understood that, although the terms "first", "second", etc. may be used herein to describe various elements, these elements should not be limited by these terms. These terms are only used to distinguish one element from another. For example, a first unit may be referred to as a second unit, and similarly a second unit may be referred to as a first unit, without departing from the scope of the exemplary embodiments. As used herein, the term "and/or" includes any and all combinations of one or more of the associated listed items.

It will be understood that when an element is referred to as being "connected" or "coupled" to another element, it can be directly connected or coupled to the other element or intervening elements may exist. In contrast, when an element is referred to as being "directly connected" or "directly coupled" to another element, there are no intervening elements present. Other words used to describe relationships between elements should be interpreted in a similar manner (e.g., "between" versus "directly between", "adjacent to" versus "directly adjacent to", etc.).

The terminology used herein is for the purpose of describing particular embodiments only and is not intended to be limiting the exemplary embodiments. As used herein, the singular forms "a", "an", and "the" are intended to include the plural forms as well, unless the context clearly indicates otherwise. It will be further understood that the terms "comprises" and/or "comprising", when used herein, specify the presence of stated features, integers, steps, operations, elements, and/or components, but do not preclude the presence or addition of one or more other features, integers, steps, operations, elements, components, and/or groups thereof.

It should also be noted that, in some alternative implementations, the recited functions/acts may occur out of the order noted in the figures. For example, two figures shown in succession may in fact be executed substantially concurrently or the figures may sometimes be executed in the reverse order, depending upon the functionality/acts involved.

Unless otherwise defined, all terms (including technical and scientific terms) used herein have the same meaning as commonly understood by a person skilled in the art to which the exemplary embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Internet Engineering Task Force (IETF) Request for Comments (RFC) 7623 § 6.2 describes full and single active redundancy schemes for PBB-EVPN in multihoming connection, where each CE device is directly connected to multiple Redundancy Groups (RG) PE devices via multi Ethernet links referred to as an Ethernet segment (ES). In full active redundancy mode (also referred to as flow-based load balancing mode), all the Ethernet links of the ES are active for all Backbone Service Instance Identifier (I-SID). Each full active ES is identified by a globally unique Backbone Media Access Control (B-MAC) address. In a single active redundancy mode (also referred to as a per-I-SID load balancing mode), for each given I-SID, only one ES Ethernet link is in an active state; traffic for all I-SIDs is evenly distributed over all Ethernet links of the ES. Different Ethernet links of the single active ES are identified by different B-MAC addresses. The PE device may use a shared B-MAC address for all the single active ES in multihoming connection as well as the ES in singlehoming connection (referred to as the shared B-MAC model), or a dedicated B-MAC address (each Ethernet link of the ES having a dedicated B-MAC address) for the single active ES in multihoming connection (referred to as the dedicated B-MAC model).

Unlike traditional EVPN, PBB-EVPN deployment scenarios where the CE devices are directly connected to the PE devices, in emerging scenarios (e.g., CloudCO scenarios), the CE devices are aggregated to the PE devices through AN devices. The EVPN solution (e.g., the PBB-EVPN solution) needs to be extended to support this PE-AN-CE aggregation connection scenario. Example embodiments of the present disclosure provide solutions for connected CE devices in a multihoming and multi-active manner in a CloudCO scenario, such as the PBB-EVPN solution. Through embodiments of the present disclosure, communication reliability of CE devices in a communication network system may be further improved. CE devices in embodiments of the present disclosure may be aggregated through a multi-chassis link (MC-LAG: the Multi-Chassis Link Aggregation Group, hereinafter also referred to as CE-LAG) is multihomed to one or more AN devices (e.g., a pair of AN devices). The present disclosure is described in further detail below with reference to the accompanying drawings.

The present disclosure provides a multi-chassis redundancy access protection method for a PBB-EVPN service. The method comprises: configuring a multi-chassis redundancy access mode for a PBB-EVPN service; wherein the multi-chassis redundancy access mode is applicable to a scenario where a CE device is multihomed to two or more access node (AN) devices of a cloud central office (CloudCO) via a multi-chassis link aggregation group (CE-LAG) and the two or more AN devices are respectively dualhomed to a same pair of redundant PE devices (a first PE). In this manner, various network configuration and management functions in the PE-AN-CE aggregation connection scenario can be efficiently implemented in accordance with similar mechanisms of the EVPN.

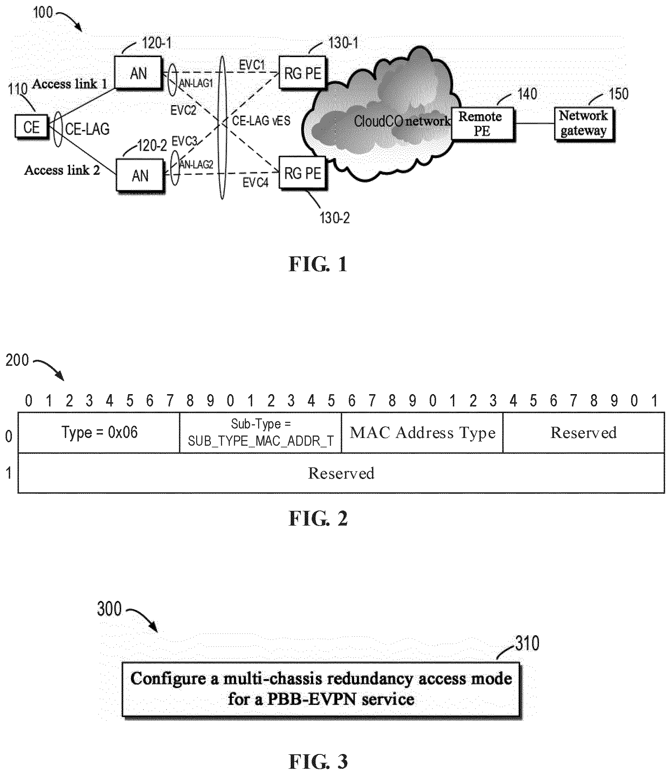

FIG. 1 illustrates a schematic diagram of an example CloudCO communication environment 100 in which embodiments of the present disclosure may be implemented. As shown in FIG. 1, the exemplary CloudCO communication environment (hereinafter referred to as a network system) 100 includes a CE device 110, an access node (AN) device 120, an RG PE device 130, a remote PE device 140, and a gateway 150. The CE device 110, access node (AN) device 120, RG PE device 130, and remote PE device 140 cooperate with each other. In some embodiments, the remote PE device 140 may be further connected to other networks through the gateway 150. For example, the gateway 150 may be a broadband network or a service gateway. In some embodiments, the network system 100 may implement a multi-chassis redundancy access protection method for a PBB-EVPN service, applying the relevant functions of the PBB-EVPN service in a CloudCO scenario. The multi-chassis redundancy access protection method comprises configuring a multi-chassis redundancy access mode for a PBB-EVPN service. The multi-chassis redundancy access mode is applicable to a scenario where the CE device (e.g., the CE device 110 shown in FIG. 1) is multihomed to two or more access node (AN) devices (e.g., AN devices 120-1, 120-2 shown in FIG. 1) of the cloud central office (CloudCO) via a multi-chassis link aggregation group (CE-LAG), and the two or more AN devices are respectively dualhomed to the same pair of redundant PE devices (a first PE) (also referred to herein as "first PEs", e.g., PE devices 130-1 and 130-2 shown in FIG. 1).

Only one CE device 110 is shown in FIG. 1. However, there may be more than one CE device. In the case of a plurality of CE devices, they may be labeled as CE devices 110-1, 100-2, etc. respectively for distinction, and may be collectively referred to as "CE device 110".

Two AN devices 120-1 and 120-2 (collectively AN devices 120) are shown in FIG. 1. However, there may be multiple AN devices, which are collectively referred to herein as "AN device 120". Hereinafter, for convenience of description, the case where the POD includes two AN devices 120-1 and 120-2 will be described as an example, but the number of AN devices 120 included in the POD in the network system 100 is not limited thereto. The number of AN devices 120 may also be one or more than two.

FIG. 1 shows two redundancy group (RG) PE devices 130-1 and 130-2 (collectively 130) that form a POD redundancy group PE comprising the PE devices 130-1 and 130-2. A remote PE device 140 is also shown in FIG. 1. The number of the RG PE devices 130 shown in FIG. 1 is merely an example, and the number of RG PE devices 130 actually deployed in the POD is generally two. In addition, there may be any number of the remote PE devices 140 in the network system 100. In the description herein, the PE device 130-1 may also be referred to as a first PE device 130-1 or a first RG PE device 130-1, and a PE device 130-2 may also be referred to as a first PE device 130-2 or a first RG PE device 130-2.

As shown in FIG. 1, the CE device 110 is connected to the access node (AN) device 120 through a multi-chassis redundancy link, e.g., connected to the two AN devices 120-1, 120-2 respectively via an access link 1 and an access link 2. The access link 1 and the access link 2 are both Ethernet links. The CE device 110 transmits/receives traffic to/from the redundant RG PE device 130 via the redundant AN device 120. The redundant Ethernet access links (in FIG. 1, access link 1 and access link 2) connecting the CE device 110 and the redundant AN devices 120-1 and 120-2 are configured as a multi-chassis link aggregation group (LAG), abbreviated as CE-LAG As shown in FIG. 1, the CE device 110 is connected to the AN devices 120-1, 120-2 through the access links 1, 2, respectively, where the access links 1, 2 are bundled as a CE-LAG In some embodiments, in the CloudCO scenario, each CE-LAG is assigned a globally unique B-MAC address (referred to herein as CE-LAG B-MAC), the value of which may be automatically generated (see RFC 7632 § 6.2.1.2) or manually configured.

Returning to FIG. 1, as shown in FIG. 1, in the network system 100, each of the AN devices 120 is connected to the respective RG PE devices 130 (i.e., the RG PE devices 130-1, 130-2) via two different Ethernet Virtual Circuits (EVCs) respectively and transmits/receives traffic to/from the RG PE devices 130 via these EVCs. For example, as shown in FIG. 1, the AN device 120-1 is connected to the RG PE device 130-1 through an EVC 1, and is connected to the RG PE device 130-2 through an EVC 2, and transmits/receives traffic to/from the RG PE devices 130 via the EVC 1 and EVC 2; the AN device 120-2 is connected to the RG PE device 130-1 through an EVC 3, and is connected to the RG PE device 130-2 through an EVC 4, and transmits/receives traffic to/from the RG PE device 130 via the EVC 3 and EVC 4. Each of the EVC herein is respectively carried on a different PE-AN Ethernet link.

For example, the AN device 120-1 and the RG PE device 130-1 are connected via a PE-AN first Ethernet link, which bears the EVC 1. Likewise, the AN device 120-1 and the RG PE device 130-2 are connected via a PE-AN second Ethernet link, which bears the EVC 2. The AN device 120-2 and the RG PE device 130-1 are connected via a PE-AN third Ethernet link, which bears the EVC 3; and the AN device 120-2 and the RG PE device 130-2 are connected via a PE-AN fourth Ethernet link, which bears an EVC 4. Each of the PE-AN first Ethernet link, the PE-AN second Ethernet link, the PE-AN third Ethernet link and the PE-AN fourth Ethernet link has a globally unique PE-AN link MAC address, respectively.

As shown in FIG. 1, the EVCs 1, 2 are EVCs corresponding to the access link 1, and the EVCs 3, 4 are EVCs corresponding to the access link 2. When a certain access link fails (state being "down"), the state of the corresponding EVC is also set to "down" accordingly. For example, when the access link 2 fails, the EVCs 3 and 4 corresponding to the access link 2 are set to a "down" state accordingly.

As shown in FIG. 1, a pair of PE-AN Ethernet links (namely, the PE-AN first Ethernet link and the PE-AN second Ethernet link) between the AN device 120-1 and the RG PE devices 130-1 and 130-2 is bundled into a multi-chassis link aggregation group (LAG) 1, abbreviated as AN-LAG1. Also, the pair of PE-AN Ethernet links (i.e., the PE-AN third Ethernet link, the PE-AN fourth Ethernet link) between the AN device 120-2 and the RG PE devices 130-1 and 130-2 is bundled as another AN link aggregation group AN-LAG2.

As shown in FIG. 1, a set of EVCs (as shown in FIG. 1, in the case of a pair of redundant AN devices 120-1 and 120-2 and a pair of redundant RG PE devices 130-1 and 130-2 of a network system 100, the EVCs 1, 2, 3 and 4) connecting the AN device 120 and the RG PE device 130 and dedicated to carrying CE-LAG traffic is referred to as a CE-LAG virtual Ethernet segment (vES). The traffic of the CE-LAG is evenly distributed over the four EVCs (i.e., EVC1, EVC2, EVC3, EVC4 shown in FIG. 1) comprised in the CE-LAG vES, where each of the four EVCs is located on a different PE-AN Ethernet link as described above. The CE-LAG vES is also globally identified by the corresponding CE-LAG B-MAC address. Each of the RG PE device 130 advertises a B-MAC route for the CE-LAG B-MAC. Each of the RG PE device 130 typically has two load balanced EVC paths to reach the CE-LAG For example, as shown in FIG. 1, the RG PE device 130-1 reaches the CE-LAG through the two load-balanced EVC paths EVC1 and EVC3, and the RG PE device 130-2 reaches the CE-LAG through the two load-balanced EVC paths EVC2 and EVC4.

The above-mentioned EVC can be realized through a Service Virtual Local Area Network (S-VLAN). If the EVC is implemented by the S-VLAN, the four dedicated EVCs (i.e., EVC1, EVC2, EVC3 and EVC4, as shown in FIG. 1) comprised in the CE-LAG vES should use the same dedicated S-VLAN ID value. In this case, the S-VLAN bridge or Cross Connect (XC) instance corresponding to the dedicated S-VLAN ID value on the AN device 120 should operate independently.

Under normal conditions, the two access links of the CE-LAG (i.e., the access link 1 and the access link 2, as shown in FIG. 1) and all four PE-AN Ethernet links between the AN devices 120-1 and 120-2 and the RG PE devices 130-1 and 130-2 are all in an active state for traffic forwarding of the CE device 110.

As described above, each of the RG PE devices 130 (RG PE device 130-1 and RG PE device 130-2 in FIG. 1) is respectively connected to each of the AN devices 120 in the downlink direction through the EVCs, and transmits/receives traffic to/from the CE device 110 via the AN devices 120. Here, "downstream direction" refers to, for example, a direction from the gateway 150 to the CE device 110.

On the other hand, each of the RG PE devices 130 (in FIG. 1, RG PE device 130-1 and RG PE device 130-2) is respectively connected to the remote PE device 140 in an uplink direction via the CloudCO network, and forwards traffic with the remote PE device 140, namely, the RG PE device 130 transmits/receives traffic to/from the remote PE device 140. Here, the "upstream direction" refers to, for example, a direction from the CE device 110 to the gateway 150.

In the above-mentioned multi-chassis redundancy access protection method for a PBB-EVPN service in the present disclosure, "configuring a multi-chassis redundancy access mode for a PBB-EVPN service" may also comprise that the RG PE device 130 advertises the following routes for the CE-LAG: a B-MAC route corresponding to a CE-LAG B-MAC address; two Ethernet segment routes corresponding to different Ethernet virtual circuits of a CE-LAG virtual Ethernet segment respectively (for example, EVC1, EVC2, EVC3 and EVC4 shown in FIG. 1); two Grouping B-MAC routes respectively corresponding to a MAC addresses of different PE-AN Ethernet links bearing CE-LAG virtual Ethernet segments (in the example shown in FIG. 1 of the present disclosure, the PE-AN first Ethernet link, the PE-AN second Ethernet link, the PE-AN third Ethernet link and the PE-AN fourth Ethernet link); and several inclusive multicast Ethernet tag routes respectively corresponding to a different backbone service instance identity (I-SID). In this manner, the RG PE device 130 can efficiently implement various network configurations and management functions in the PE-AN-CE aggregation connection scenario in accordance with similar mechanisms of the EVPN.

The remote PE device 140 is connected to the gateway 150 in the upstream direction and forwards traffic to the gateway 150, i.e., the remote PE device 140 transmits/receives traffic to/from the gateway 150. A remote PE device is also referred to herein as a "second PE device".

In conventional EVPN and PBB-EVPN solutions, an EVPN MAC/IP advertisement route (EVPN route type 2) is used to distribute various MAC address routes and MAC address Grouping information, such as C-MAC (Customer MAC address), B-MAC, and Grouping B-MAC. As described above, a new MAC address type, CE-LAG B-MAC address, is introduced in the present disclosure, and therefore its MAC address type needs to be explicitly indicated to enable the remote PE to recognize the newly defined CE-LAG B-MAC and process it using the method described in the present disclosure. The technical solution of the present disclosure defines a new EVPN MAC Address Type Extended Community, which can precisely indicate that a B-MAC address advertised by a B-MAC route identifies a CE-LAG under a PE-AN-CE aggregation connection scenario, and at the same time provides relevant EVPN route encoding and PBB-EVPN multihoming connection functions. The technical solution of the present disclosure realizes a solution for a CE device multihomed to the AN device via MC-LAG and access a PBB-EVPN service in a CloudCO scenario.

Besides, in addition to the CE-LAG B-MAC address, the complete PBB-EVPN solution in the CloudCO scenario needs to handle other MAC address types, such as an AN B-MAC that identifies all access links of a singlehoming ES and a multihoming single active ES connected to one AN device 120 (i.e., a shared B-MAC model), or a dedicated B-MAC that identifies a single access link of a multihoming single active ES (i.e., a dedicated B-MAC model). In order to distinguish the B-MAC types representing different types of vES, the MAC address type needs to be explicitly defined in the PBB-EVPN solution of the CloudCO scenario.

To explicitly inform MAC address types, the present disclosure provides a method of explicitly indicating the MAC address type advertised by an EVPN route, wherein the method includes newly defining an EVPN MAC Address Type Extended Community, as shown in FIG. 2. FIG. 2 shows a schematic diagram of a newly defined EVPN MAC Address Type extended community 200 according to an embodiment of the present disclosure. The newly defined MAC Address Type Extended Community 200 is used to precisely instruct the remote PE (the second PE, e.g., the remote PE device 140 shown in FIG. 1) to process the traffic of the CE-LAG using the PBB-EVPN service multi-chassis redundancy access protection method 300. As stated above, the traffic of the CE-LAG is evenly carried on all relevant PE-AN Ethernet links via a group of dedicated Ethernet virtual circuits, and the group of Ethernet virtual circuits constitutes a virtual Ethernet segment carrying the traffic of the CE-LAG The CE-LAG and the virtual Ethernet segment thereof are identified by a B-MAC address (CE-LAG B-MAC address). In addition, in the above-mentioned multi-chassis redundancy access protection method for a PBB-EVPN service in the present disclosure, "configuring a multi-chassis redundancy access mode for a PBB-EVPN service" may also include the method for explicitly indicating the MAC address type advertised by the EVPN route described in view of FIG. 2.

Returning to FIG. 1, in a multi-chassis redundancy access mode for a PBB-EVPN service as shown in FIG. 1, traffic of a CE-LAG is evenly carried on all relevant PE-AN Ethernet links (for example, a pair of PE-AN Ethernet links (namely, the PE-AN first Ethernet link and the PE-AN second Ethernet link) between the AN device 120-1 and the RG PE devices 130-1 and 130-2, and a pair of PE-AN Ethernet links (namely, the PE-AN third Ethernet link and the PE-AN fourth Ethernet link) between the AN device 120-2 and the RG PE devices 130-1 and 130-2) via a set of dedicated PE-AN Ethernet links (EVCs, shown as EVCs 1, 2, 3 and 4 in FIG. 1), and the Ethernet virtual circuit group constitutes a virtual Ethernet segment (vES) bearing the CE-LAG traffic.

As shown in FIG. 2, in the newly defined EVPN MAC Address Type Extended Community 200, a Sub-Type value may be a vendor-specific value, or may be allocated by the Internet Number Assignment Authority (IANA) from a child registry "EVPN Extended Community Sub-Types" of a registry "Border Gateway Protocol (BGP) Extended Communities".

A "Reserved" field in the newly defined EVPN MAC Address Type Extended Community 200 is not used and is set to a value of 0.

A "MAC Address Type" field is included in the newly defined EVPN MAC Address Type Extended Community 200 to distinguish a B-MAC route for CE-LAG B-MAC from a MAC route for other MAC address types. The "MAC Address Type" field comprises a MAC address type value. The present disclosure illustratively defines the following MAC address type values.

**Table 1 MAC address type values**

| MAC address type value | Meaning |
|---|---|
| 0 | C-MAC (as described in RFC 7423) |
| 1 | Normal B-MAC (as described in RFC 7623) |
| 2 | Grouping B-MAC (as described in draft-ietf-bess-evpn-virtual-eth-segment in §4.2.2) |
| CE_LAG_B_MAC | CE-LAG B-MAC (as described in the present disclosure) |

Note: in the present disclosure, CE_LAG_B_MAC represents an 8-bit constant assigned to the CE-LAG B-MAC type.

MAC address types 0, 1 and 2 are defined for backward compatibility. Hereinafter, the CE_LAG_B_MAC address type newly defined in the present disclosure will be mainly described.

The EVPN MAC/IP route that does not advertise the EVPN MAC Address Type Extended Community 200 is referred to as an implicit MAC address type. For backward compatibility with RFC 7432, RFC 7632 and draft-ietf-bess-evpn-virtual-eth-segment, the C-MAC address, the ordinary B-MAC address and the Grouping B-MAC address may be and typically are advertised using an implicit MAC address type.

The method of inferring the MAC address type from the implicit MAC address type is as follows.

(i) If a MAC address is to be imported into the MAC-VRF (Virtual Routing and Forwarding table for MAC addresses) of the EVPN service, the MAC address type should be 0 (i.e., C-MAC).

(ii) if a MAC address is to be imported into the B-MAC-VRF of the PBB-EVPN service,

a) if the Multi-Protocol Label Switching (MPLS) Label 1 field of the imported EVPN MAC/IP advertisement route comprises a non-zero value, the MAC address type shall be 1 (i.e., ordinary B-MAC).

b) otherwise (i.e., MPLS Label 1 field comprises 0), the MAC address type shall be 2 (i.e., Grouping B-MAC).

All other types of MAC addresses, including the CE-LAG B-MAC type defined in the present disclosure, should be advertised using explicit MAC address types. For example, if the value of the "MAC Address Type" field of the newly defined EVPN MAC Address Type Extended Community 200 is set to CE_LAG_B_MAC, it explicitly indicates that the B-MAC route advertises a CE-LAG B-MAC address.

In the present disclosure, the CE-LAG and its corresponding virtual Ethernet segment shown in FIG. 1 can be identified by one B-MAC address (CE-LAG B-MAC address) by newly defining an EVPN MAC Address Type Extended Community that includes a "MAC Address Type" field.

After the CE-LAG B-MAC type is defined, a corresponding EVPN route encoding scheme also needs to be specified so as to enable the remote PE device 140 to know the network topology structure among the CE device 110, the AN device 120 and the RG PE device 130 and perform corresponding operations.

Specifically, in the network system 100, each of the RG PE devices 130 advertises a B-MAC route of each CE-LAG, along with a newly defined EVPN MAC Address Type Extended Community 200, one or two EVPN Router's MAC Extended Communities, and a Route Target Extended Community. The EVPN MAC Address Type Extended Community 200 comprises the CE_LAG_B_MAC value newly defined in the present disclosure.

The B-MAC route and the route target Extended Community are encoded in accordance with RFC 7623 § 5.2. The B-MAC route comprises the MAX-ESI value (i.e., a 10-octet value with all bits "1") in the "Ethernet Segment Identifier" (ESI) field.

The EVPN MAC Address Type Extended Community 200 comprises the CE_LAG_B_MAC value in the "MAC Address Type" field, indicating that the B-MAC route comprises the CE-LAG B-MAC address newly defined in the present disclosure.

The EVPN Router's MAC Extended Community is encoded in accordance with RFC 9135 § 8.1. Each EVPN Router's MAC Extended Community contains a separate PE-AN link MAC address that identifies a separate EVC path to the CE-LAG B-MAC. The EVPN Router's MAC Extended Community is used to support fast convergence in case of PE-AN link failure (to be described later).

In general, the RG PE device 130 advertises the B-MAC route of the CE-LAG B-MAC and two EVPN Router's MAC Extended Communities to indicate that the RG PE device 130 can reach the CE-LAG B-MAC via two active EVC paths. If the CE-LAG experiences an access link failure, for example, as shown in FIG. 1, if the access link 1 in the CE-LAG experiences an access link failure, the RG PE device 130 will re-advertise the B-MAC route of the CE-LAG B-MAC and only one EVPN Router's MAC Extended Community to indicate that the RG PE device can now reach the CE-LAG B-MAC only through one active EVC path.

Each the RG PE device 130 advertises the Grouping B-MAC route and Route's Target Extended Community (and optionally EVPN MAC Address Type Extended Community 200) for the MAC address PE-AN Ethernet link locally connected. The Grouping B-MAC route is described in draft-ietf-bess-evpn-virtual-eth-segment § 4.2.2, and the encoding thereof is the same as that of an ordinary B-MAC route (RFC 7623 § 5.2) except for an MPLS Label 1 field containing a bit "0". The Ethernet Segment Identifier field is also set to 0 and the MAC address field comprises the PE-AN link MAC address. Further, the EVPN MAC Address Type Extended Community 200 is optional and is typically omitted (i.e., the implicit MAC address type is adopted). If this extended community is transmitted along, the MAC address type field must be set to 2 to explicitly indicate the Grouping B-MAC type.

As described in RFC 7623 § 5.3, each of the RG PE devices 130 advertises Inclusive Multicast Ethernet Tag routes, an Provider Multicast Service Interface Tunnel attribute, and a Route's Target Extended Community.

Each of the RG PE devices 130 advertises two Ethernet segment routes for the CE-LAG virtual Ethernet segment. The Ethernet segment identifier field of the EVPN Ethernet segment route is encoded as type 3 ESI, and the upper 6 octets of the ESI value thereof comprises an Ethernet virtual circuit identifier of the CE-LAG virtual Ethernet segment and is numerically equal to the MAC address of the PE-AN Ethernet link bearing the Ethernet virtual circuit; and the lower 3 octets of the ESI value are set to 0. Each such Ethernet segment route comprises a 6-octet EVC ID (numerically equal to the MAC address of the PE-AN link underlying the EVC) with respect to the CE-LAG virtual Ethernet segment context. Each EVPN Ethernet segment route is issued along with an ES-Import Route Target Extended Community, a DF Election Extended Community, and a Router's MAC Extended Community. The ES-Import Route Target Extended Community comprises the CE-LAG B-MAC address (note: the CE-LAG B-MAC address and the 6-octet EVC ID comprised in the Ethernet segment route together constitute a globally unique EVC identifier). The DF Election Extended Community comprises a newly defined DF Alg value, i.e. DF_ALG_PBB_EVPN_CE_LAG_CCO, to indicate that a new DF candidate set construction and election algorithm is adopted, as will be described later.

A virtual Ethernet segment member Ethernet virtual circuit table (vES member EVC table) is maintained on the remote PE device 140.

In the above-mentioned multi-chassis redundancy access protection method for a PBB-EVPN service in the present disclosure, "configuring a multi-chassis redundancy access mode for a PBB-EVPN service" may further comprise: the remote PE device 140 locally maintaining the virtual Ethernet segment member Ethernet virtual circuit table (vES member EVC table), to track PE IP addresses of all the virtual Ethernet segments and Ethernet virtual circuit identifiers (EVC ID). For example, in some embodiments, the remote PE device 140 locally maintains a list of EVCs comprised in the CE-LAG vES, e.g., referred to as a vES member EVC table. A "vES member EVC Table" is information about each EVC comprised in a vES as defined below. The remote PE device 140 may then, based on the vES member EVC table, load-balance and re-balance between the pair of redundant RG PE devices 130 to which the vES is connected.

Each the virtual Ethernet segment member Ethernet virtual circuit table comprises the following information:
- a virtual Ethernet segment B-MAC address;
- a virtual Ethernet segment B-MAC type;
- a PE IP address 1 and a list of active Ethernet virtual circuits that the virtual Ethernet segment is connected to the redundant PE;
- a PE IP address 2 and a list of active Ethernet virtual circuits that the virtual Ethernet segment is connected to the redundant PE,
- the PE IP address 1 and the PE IP address 2 respectively identify a pair of redundant PEs connected to the virtual Ethernet segment; the Ethernet virtual circuit identifier is numerically equal to the MAC address of the PE-AN Ethernet link underlying the Ethernet virtual circuit.

For example, as illustrated for FIG 1, each the vES member EVC table (i.e., each vES B-MAC entry) comprises the following information.
- a vES B-MAC value
- a vES B-MAC type
- the PE IP address 1
   √a list of EVC-IDs
- the PE IP address 2
   √ a list of EVC-IDs

The vES B-MAC address is 6 octets in length, and each vES B-MAC globally and uniquely identifies a vES.

The vES B-MAC type is an enumerated type with valid values {CEL_AG_B_MAC, AN_B_MAC, ACCESS_LINK_B_MAC}. For the CE-LAG B-MAC type newly defined in CloudCO, the value is "CE_LAG_B_MAC".

The PE IP address 1, and the PE IP address 2 are 4/16-octet IPv4/v6 addresses of RG PEs 130-1 and 130-2, respectively. Each of the PE IP addresses 1 and 2 is associated with a 6-octet EVC-ID list with no more than 2 entries. Each EVC-ID in the list identifies an active EVC of the vES connected to the RG PE 103. Each EVC-ID is numerically equal to the MAC address of the PE-AN Ethernet link underlying the EVC. For example, in the example shown in FIG. 1, the RG PE 130-1 is associated with EVCs 1, 3, and the RG PE 130-2 is associated with EVCs 2, 4. Thus, members of the EVC-ID list associated with the PE IP address 1 are EVC1-ID and EVC3-ID, and members of the EVC-ID list associated with the PE IP address 2 are EVC2-ID and EVC4-ID, respectively.

The remote PE device 140 maintains the vES member EVC table in the following manner.

When the remote PE device 140 imports a B-MAC route and an EVPN MAC Address Type Extended Community 200 (e.g., the MAC address type field comprises CE_LAG_B_MAC) and one or two EVPN Router's MAC Extended Community lists, it derives the corresponding vES B-MAC, vES B-MAC type, PE IP (i.e., BGP NEXT_HOP) and one or two EVC-IDs, and then updates the vES B-MAC entry of the vES member EVC table accordingly.

In the above-mentioned multi-chassis redundancy access protection method for a PBB-EVPN service in the present disclosure, "configuring a multi-chassis redundancy access mode for a PBB-EVPN service" may further comprise: the remote PE device 140 updates the virtual Ethernet segment Ethernet virtual circuit table based on a received B-MAC route advertisement message and a Grouping B-MAC route withdrawal message, wherein the B-MAC route is advertised along with the MAC Address Type Extended Community and one or two Router's MAC Extended Communities. For example, in the example shown in FIG. 1, after the remote PE device 140 receives the B-MAC route advertisement message (along with the MAC Address Type Extended Community and one or two Router's MAC Extended Communities), the corresponding vES B-MAC, vES B-MAC type, PE IP, and one or two EVC-IDs are derived, and the vES B-MAC entry of the vES member EVC table is updated accordingly. When a Grouping B-MAC route withdrawal message is received, it (i.e., the remote PE device 140) derives a withdrawn EVC-ID value which is numerically equal to the PE-AN link MAC address comprised in the withdrawn Grouping B-MAC route, and then deletes all those EVC-IDs in the vES member EVC table that are identical to the withdrawn EVC-ID value.

Any update in the vES member EVC table in the remote PE device 140 will then trigger the remote PE device 140 to perform load balancing and re-balancing of the updated vES.

### PBB-EVPN Multihoming Connection Function for CE-LAG in the CloudCO

For the CE-LAG in the CloudCO, the PBB-EVPN multihoming connection function involves CE-LAG vES auto discovery and Delegated Forwarder (DF) election, load balancing and re-balancing, access link failure handling, fast convergence (from PE-AN Ethernet link failure), and split horizon filtering. The DF of the CE-LAG vES refers to the EVC in the CE-LAG vES responsible for forwarding downlink broadcast, unknown unicast and multicast (BUM) traffic. All non-DF EVCs are blocked for forwarding downstream BUM traffic.

### CE-LAG vES Auto Discovery and DF Election

In the above-mentioned multi-chassis redundancy access protection method for a PBB-EVPN service in the present disclosure, "configuring a multi-chassis redundancy access mode for a PBB-EVPN service" may further comprise: a redundant PE device connected to the same virtual Ethernet segment finding other redundant PE devices connected to the same virtual Ethernet segment by transmitting and receiving the EVPN Ethernet segment route, and electing a designated forwarder (DF). The DF election and re-election are triggered by the advertisement/withdrawal of the Ethernet segment routes and withdrawal of the Grouping B-MAC routes for the PE-AN Ethernet links.

For example, in one embodiment, each of the RG PE devices 130 advertises two Ethernet segment routes for each locally connected CE-LAG vES (each Ethernet segment route for one active EVC included in the CE-LAG vES), an ES-Import Route Target Extended Community, a DF Election Extended Community, and an EVPN Router's MAC Extended Community.

The "ES-Import" field of the ES-Import Route Target Extended Community comprises the CE-LAG B-MAC. The two RG PE devices 130 also install import filters for the ES-Import route target.

By advertising two Ethernet segment routes and importing another two Ethernet segment routes for the CE-LAG vES, the two RG PE devices 130 can discover each other's IP Address (comprised in the "Originating Router's IP address" fields of the imported Ethernet segment routes) and further elect the DF for the CE-LAG vES.

As described above, the present disclosure defines a new DF election algorithm identified by a new DF Alg value "DF_ALG_PBB_EVPN_CE_LAG_CCO" comprised in a DF Election Extended Community to indicate a new DF candidate set construction method and election of a DF from the new DF candidate set. The DF Alg value "DF_ALG_PBB_EVPN_CE_LAG_CCO" may be locally configured as a vendor-specific function on all the RG PE devices 130 or distributed by the IANA in the "DF Alg" sub registry of the registry "Border Gateway Protocol (BGP) Extended Communities".

In the above-mentioned multi-chassis redundancy access protection method for a PBB-EVPN service in the present disclosure, "configuring a multi-chassis redundancy access mode for a PBB-EVPN service" may further comprise: based on all the EVPN Ethernet segment routes related to the CE-LAG B-MAC virtual Ethernet segment, a new DF candidate set construction and election algorithm specified by a DF Alg value of a DF Election Extended Community is adopted, wherein the DF candidate set comprises four Ethernet virtual circuit identifiers with the numerical value of PE-AN Ethernet link MAC address.

For example, in the example shown in FIG. 1, the DF candidate set construction and election algorithm specified by the DF Alg value of the DF Election Extended Community is adopted based on all EVPN Ethernet segment routes related to the CE-LAG B-MAC virtual Ethernet segment. Here, the DF candidate set consists of four 6-octet EVC IDs. As described above, each EVC ID is numerically equal to the 6-octet MAC address of the PE-AN Ethernet link underlying the EVC.

The two RG PE devices 130 (i.e., the RG PE devices 130-1, 130-2 shown in FIG. 1) construct the DF candidate set consisting of four 6-octet EVC IDs from the four Ethernet segment routes associated with the CE-LAG vES. Each EVC ID is derived by extracting the upper 6 octets from the ESI value subfield of the Ethernet segment identifier field. If the ID of EVCi (i = 1, 2, 3, 4) is denoted as EVCi-ID, then in the example shown in FIG. 1, the DF candidate set is the set of EVCi-IDs, i.e., {EVC1-ID, EVC2-ID, EVC3-ID, EVC4-ID}.

After constructing the DF candidate set from all relevant Ethernet segment routes as described above, the RG PE device 130 selects an EVCi-ID from the DF candidate set as a DF using a standard DF election algorithm, such as the service carving algorithm (see RFC 7432 § 8.5) or the highest random weight algorithm (see RFC 8584 § 3.2). As described above, each entry of the DF candidate set is a 6-octet EVC ID instead of a 4/16-octet PE IP v4/v6 address.

### Load Balancing

In the above-mentioned multi-chassis redundancy access protection method for a PBB-EVPN service in the present disclosure, "configuring a multi-chassis redundancy access mode for a PBB-EVPN service" may further comprise: traffic transmitted from the remote PE to the B-MAC virtual Ethernet segment is load-balanced between a pair of redundant PE devices that can reach the B-MAC. For example, in the example shown in FIG. 1, when the remote PE device 140 transmits traffic (packets) to the CE-LAG B-MAC, it performs load balancing between a pair of RG PE devices 130 (in FIG. 1, RG PE devices 130-1 and 130-2) that may reach the CE-LAG B-MAC. The load balancing weight for each RG PE device is derived according to the following method.

The remote PE device derives a load balancing weight of traffic of the B-MAC virtual Ethernet segment in each redundant PE device from the virtual Ethernet segment Ethernet virtual circuit table. Taking the example shown in FIG. 1 as an example, the remote PE device 140 derives (calculates) load balancing weights for each RG PE device 130 from the vES member EVC table. Specifically, the load balancing weight of traffic of a B-MAC virtual Ethernet segment in a redundant PE device is equal to a ratio of the number of active Ethernet virtual circuits connected to the PE device by the virtual Ethernet segment to the number of all active Ethernet virtual circuits connected to all redundant PE devices. For example, in the example shown in FIG. 1, the number of active EVCs connected to the RG PE device 130-1 and the RG PE device 130-2 are respectively calculated in the vES member EVC table, e.g., N1 for the RG PE device 130-1 and N2 for the RG PE device 130-2. Then, the load balancing weights of the RG PE device 130-1 and the RG PE device 130-2 are calculated as N1/(N1 + N2) and N2/(N1 + N2), respectively. The values of N1 and N2 may be 0, 1 or 2. If N1 and N2 are both 0, then the load balancing weights of both the RG PE device 130-1 and the RG PE device 130-2 are 0, i.e., the remote PE should discard all traffic destined for the CE-LAG B-MAC.

For example, in the example shown in FIG. 1, in the case where two access links (namely, the access link 1 and the access link 2) comprised in the CE-LAG and four EVCs (namely, the EVC1, the EVC2, the EVC3 and the EVC4) comprised in the CE-LAG vES are all active, the EVC-ID list under the PE IP address 1 comprises the EVC1 and the EVC3, and a corresponding N1 value = 2; meanwhile, the EVC-ID list under the PE IP address 2 includes the EVC 2 and the EVC 4, and a corresponding N2 value = 2. Thus, the load balancing weights N1/(N1 + N2) and N2/(N1 + N2) of the RG PE device 130-1 and the RG PE device 130-2 are both 1/2. This means that the remote PE device 140 will allocate traffic to the CE-LAG B-MAC between the RG PE device 130-1 and the RG PE device 130-2 in a 1/2: 1/2 (i.e., 1: 1) ratio.

If, for example, the EVC 3 fails to work normally and thus cannot forward traffic due to a link failure, etc. then the above-mentioned access link failure processing is performed, and the vES member EVC table is updated, wherein the EVC-ID list under the PE IP address 1 after updation comprises only EVC 1 and no longer comprises EVC 3 which fails to work normally after the failure, so at this moment, the N1 value corresponding to the PE IP address 1 = 1. Thus, the load balancing weights N1/(N1 + N2) and N2/(N1 + N2) of the RG PE device 130-1 and the RG PE device 130-2 are 1/3, 2/3, respectively. This means that the remote PE device 140 will distribute traffic between the RG PE device 130-1 and the RG PE device 130-2 in a 1/3: 2/3 (i.e., 1: 2) ratio.

### Access Link Failure Processing

For example, in the example shown in FIG. 1, in a normal state (i.e., the access links between the CE device 110 and the AN device 120 are both active and all the EVCs, including the EVCs 1-4, between the AN device 120 and the RG PE device 130 are active), the RG PE device 130 advertises the B-MAC route for the CE-LAG B-MAC and simultaneously advertises the two EVPN Router's MAC Extended Communities to indicate that the CE-LAG B-MAC can be reached through the two active EVC paths associated with the RG PE device 130. For example, taking the RG PE device 130-1 as an example, in a normal state, the RG PE device 130-1 advertises the B-MAC route for the CE-LAG B-MAC and simultaneously advertises the two EVPN Router's MAC Extended Communities to indicate that the CE-LAG B-MAC can be reached through two active EVC (i.e., the EVC1, the EVC3) paths associated with the RG PE device 130-1.

When the CE-LAG experiences an access link failure, for example, when the access link 1 shown in FIG. 1 fails, the EVC of the CE-LAG vES corresponding to the access link 1 (the EVC 1 and the EVC 2 in FIG. 1, respectively) will be set to a "down" state accordingly.

If the RG PE device 130 detects that a certain EVC included in the CE-LAG vES is in a "down" state, it withdraws the Ethernet segment route corresponding to the EVC in the "down" state (for example, in the case where the EVC1 is in a "down" state, withdraws the Ethernet segment route corresponding thereto), and re-advertises the B-MAC route for the CE-LAG B-MAC and at the same time advertises only one EVPN Router's MAC Extended Community, where the EVPN Router's MAC Extended Community comprises the 6-octet EVC-ID of the still active EVC (numerically equal to the MAC address underlying the PE-AN Ethernet link of the still active EVC) to indicate that the CE-LAG B-MAC can now only be reached through one active EVC path (in this example, the EVC2, since the EVC1 is in "down" state) to which the RG PE device 130 is connected. Subsequently, the RG PE device 130 will perform DF re-election for the CE-LAG vES and the remote PE device 140 will perform load re-balancing for the CE-LAG vES.

### Fast convergence

The PE-AN Ethernet link failure will cause all the EVCs on the PE-AN Ethernet link to fail, which will trigger extensive DF re-election and load re-balancing for all affected CE-LAG vES.

With regard to this situation, in the above-mentioned multi-chassis redundancy access protection method for a PBB-EVPN service in the present disclosure, "configuring a multi-chassis redundancy access mode for a PBB-EVPN service" further comprises: if the PE-AN Ethernet link between the AN device 120 and the PE device 130 fails, the PE device 130 triggers a fast convergence procedure by withdrawing the Grouping B-MAC route corresponding to the failed PE-AN Ethernet link.

According to one embodiment of the present disclosure, the RG PE device 130 detects the PE-AN Ethernet link failure, and triggers the re-convergence procedure by advertising a fast convergence message. In this embodiment, the EVCs that fail due to the PE-AN Ethernet link failure in all the affected CE-LAG vES have the same EVC-ID value; as previously described, this EVC-ID value is equal to the MAC address of the failed PE-AN Ethernet link, referred to as an invalid PE-AN link MAC address or an invalid EVC-ID.

If the RG PE device 130 detects that the locally connected PE-AN Ethernet link fails, it immediately withdraws the Grouping B-MAC route corresponding to the failed PE-AN Ethernet link(namely, triggering the fast convergence procedure of the peer RG PE device 130 and the remote PE device 140 by advertising the invalid PE-AN link MAC address or the invalid EVC-ID to the peer RG PE device 130 and the remote PE device 140). For example, in the example shown in FIG. 1, the RG PE device 130-1 and the RG PE device 130-2 each is a peer RG PE device for the other; if the RG PE device 130-1 detects that the locally connected PE-AN Ethernet link fails (for example, the PE-AN first Ethernet link fails), it immediately transmits the fast convergence message to the RG PE device 130-2 and the remote PE device 140.

If the peer RG PE device 130 receives the Grouping B-MAC route withdrawal notification message for the failed PE-AN link, it derives an Ethernet segment route list, and the EVPN Router's MAC Extended Community accompanied with the Ethernet segment routes comprises the withdrawn Grouping B-MAC address (namely, the failed PE-AN link MAC address), and then the peer RG PE device 130 performs a withdrawal procedure on all the Ethernet segment routes in the Ethernet segment route list (so as to trigger DF re-election of all the affected CE-LAG vES). The RG PE device 130 that the local PE-AN Ethernet link failed should also perform DF re-election on all affected CE-LAG vES.

If the remote PE device 140 receives a withdrawal notification for the Grouping B-MAC for a failed PE-AN link, it repeats the following procedure for all vES B-MAC entries in the vES member EVC table.

If a CE-LAG B-MAC entry comprises an invalid EVC-ID value, the remote PE device 140 deletes the invalid EVC-ID from the CE-LAG B-MAC entry and performs load re-balancing for the CE-LAG vES.

Otherwise, if the CE-LAG B-MAC entry does not comprise an invalid EVC-ID, the remote PE device 140 does nothing to the CE-LAG B-MAC entry.

### Split horizon filtering

To support split horizon filtering of the BUM traffic, I-components of all the RG PE devices 130 must enable a source B-MAC address filtering mechanism of a PBB standard (see IEEE Std 802.1Q-2018 § 6.10.1) to block all downstream traffic whose source B-MAC address is the same as the configured CE-LAG B-MAC address thereof.

FIG. 3 illustrates a flow diagram of multi-chassis redundancy access protection method 300 for a PBB-EVPN service according to an embodiment of the present application. As shown in FIG. 3, the present disclosure provides a multi-chassis redundancy access protection method 300 for a PBB-EVPN service. The multi-chassis redundancy access protection method 300 includes step 310. In step 310, a multi-chassis redundancy access mode for the PBB-EVPN service is configured. The multi-chassis redundancy access mode is applicable to a scenario where a CE device (e.g., the CE device 110 shown in FIG. 1) is multihomed to two or more access node (AN) devices of a cloud central office (CloudCO) via a multi-chassis link aggregation group (CE-LAG) and the two or more AN devices (e.g., the AN devices 120-1, 120-2 shown in FIG. 1) are respectively dualhomed to the same pair of redundant PE devices (e.g., the PE devices 130-1, 130-2 shown in FIG. 1).

In some embodiments, the MAC address type advertised by the EVPN route is also explicitly indicated by newly defining the EVPN MAC Address Type Extended Community. The traffic of the CE-LAG is evenly carried on all relevant PE-AN Ethernet links via a group of dedicated Ethernet virtual circuits which constitute a virtual Ethernet segment bearing the traffic of the CE-LAG; the CE-LAG and the virtual Ethernet segment thereof are identified by a B-MAC address (CE-LAG B-MAC address); the newly defined EVPN MAC Address Type Extended Community is used for precisely indicating the remote PE device to process the traffic of the CE-LAG using the multi-chassis redundancy access protection method for a PBB-EVPN service described in the present disclosure.

In some embodiments, in the PBB-EVPN service multi-chassis redundancy access mode, the first PE device advertises the following EVPN routes for the CE-LAG: a B-MAC route corresponding to the CE-LAG B-MAC address; two Ethernet segment routes respectively corresponding to different Ethernet virtual circuits of the CE-LAG virtual Ethernet segment respectively; two Grouping B-MAC routes respectively corresponding to the MAC addresses of different PE-AN Ethernet links bearing the CE-LAG virtual Ethernet segment; and several inclusive multicast Ethernet tag routes respectively corresponding to a different backbone service instance identity (I-SID).

In some embodiments, the remote PE device locally maintains the virtual Ethernet segment member Ethernet virtual circuit (vES member EVC) table, so as to track the PE IP addresses and the Ethernet virtual circuit identifiers of all the virtual Ethernet segments; each entry of the virtual Ethernet segment member Ethernet virtual circuit table comprises the following information: the virtual Ethernet segment B-MAC address; the virtual Ethernet segment B-MAC type; the PE IP address 1 and the list of active Ethernet virtual circuits through which the virtual Ethernet segment is connected to the redundant PE; and the PE IP address 2 and the list of active Ethernet virtual circuits through which the virtual Ethernet segment is connected to the redundant PE. The PE IP address 1 and the PE IP address 2 respectively identify the pair of redundant PEs connected to the virtual Ethernet segment; and the Ethernet virtual circuit identifier is numerically equal to the MAC address of the PE-AN Ethernet link underlying the Ethernet virtual circuit.

In some embodiments, the virtual Ethernet segment member Ethernet virtual circuit (vES member EVC) table is updated by the remote PE device based on the received B-MAC route advertisement message and the Grouping B-MAC route withdrawal message. The B-MAC route is advertised along with the MAC Address Type Extended Community and the one or two Router's MAC Extended Communities.

In some embodiments, traffic transmitted from the remote PE to the B-MAC virtual Ethernet segment is load balanced between the pair of redundant PE devices that reach the B-MAC. The remote PE derives the load balancing weight of traffic of a B-MAC virtual Ethernet segment in each redundant PE device from the virtual Ethernet segment member Ethernet virtual circuit (vES member EVC) table. In particular, the load balancing weight of traffic of a B-MAC virtual Ethernet segment in a redundant PE device is equal to a ratio of the number of active Ethernet virtual circuits connected to the PE device by the virtual Ethernet segment to the number of all active Ethernet virtual circuits connected to all redundant PE devices.

In some embodiments, the redundant PE device connected to the same virtual Ethernet segment transmits and receives EVPN Ethernet segment routes to find other redundant PE devices connected to the same virtual Ethernet segment, and elects the delegated forwarder (DF).

In some embodiments, the Ethernet Segment Identifier (ESI) field of the EVPN Ethernet segment route is encoded as type 3 ESI, and the upper 6 octets of an ESI value thereof comprises an Ethernet virtual circuit identifier of the CE-LAG virtual Ethernet segment and are numerically equal to the MAC address of the PE-AN Ethernet link underlying the Ethernet virtual circuit; the lower 3 octets of the ESI value are padded with zeros. Each EVPN Ethernet segment route is issued along with the ES-Import Route Target Extended Community, the DF Election Extended Community and the Router's MAC Extended Community. The ES-Import Route Target Extended Community comprises the CE-LAG B-MAC address. The DF Election Extended Community comprises a new DF Alg value to indicate adoption of the new DF candidate set construction and election algorithm.

In some embodiments, based on all the EVPN Ethernet segment routes related to the CE-LAG B-MAC virtual Ethernet segment, the new DF candidate set construction and election algorithm designated by the DF Alg value of the DF Election Extended Community is adopted, wherein the DF candidate set comprises four Ethernet virtual circuit identifiers with the numerical value of the PE-AN Ethernet link MAC address.

In some embodiments, if the CE-LAG access link between the CE device and the AN device fails, or the PE-AN link between the AN device and the PE device fails, the PE device will re-announce the B-MAC route corresponding to the failed CE-LAG or withdraws the Grouping B-MAC route corresponding to the failed PE-AN link, in order to trigger a fast convergence procedure.

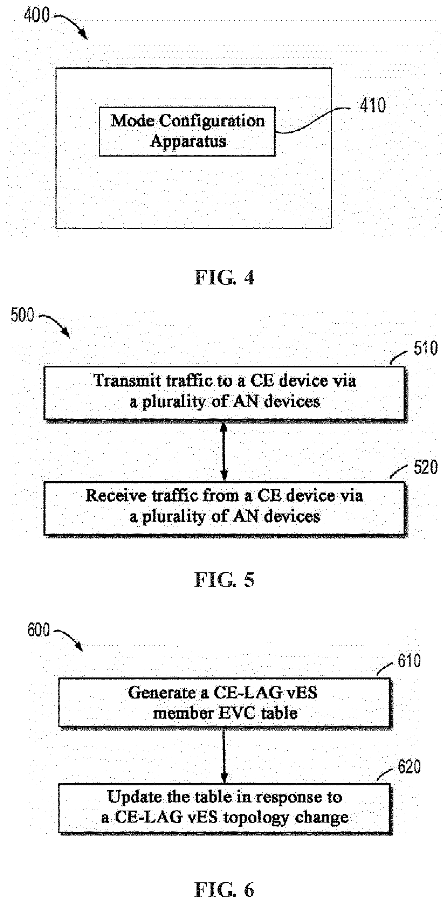

FIG. 4 illustrates a schematic structural diagram of a multi-chassis redundancy access protection apparatus 400 for a PBB-EVPN service according to an embodiment of the present application. As shown in FIG. 4, the present disclosure provides a multi-chassis redundancy access protection apparatus 400 for a PBB-EVPN service. The multi-chassis redundancy access protection apparatus 400 comprises a mode configuration apparatus 410 for configuring a multi-chassis redundancy access mode for a PBB-EVPN service. The multi-chassis redundancy access mode is applicable to a scenario where the CE device (e.g., the CE device 110 shown in FIG. 1) is multihomed to two or more AN devices (e.g., the AN devices 120-1, 120-2 shown in FIG. 1) of the CloudCO via the CE-LAG (e.g., the CE-LAG shown in FIG. 1), and the two or more AN devices are respectively dualhomed to the same pair of redundant PE devices (e.g., the PE devices 130-1, 130-2 shown in FIG. 1).

In some embodiments, the PE device 130 for multi-chassis access protection for a PBB-EVPN service is provided, wherein the PE device 130 comprises a processor and a memory, and the memory stores a computer program. When the computer program is executed by the processor, the following steps are implemented: configuring a multi-chassis redundancy access mode for a PBB-EVPN service. As described above, the multi-chassis redundancy access mode is applicable to a scenario where the CE device 110 is multihomed to two or more AN devices 120 of the CloudCO via the CE-LAG, and the two or more AN devices 120 are respectively dualhomed to the same pair of redundant PE devices 130.

In some embodiments, a computer-readable storage medium having stored therein a computer program for a multi-chassis access protected PE device for a PBB-EVPN service is provided. When the computer program is executed by the PE device, the following steps are implemented: configuring a multi-chassis redundancy access mode for a PBB-EVPN service; wherein the multi-chassis redundancy access mode is applicable to a scenario where the CE device 110 is multihomed to two or more access node (AN) devices 120 of a cloud central office (CloudCO) via the CE-LAG and the two or more AN devices are respectively dualhomed to the same pair of redundant PE devices 130.

In some embodiments, the CE device 110 transmits traffic to a PE redundancy group that includes multiple PE devices 130 via the AN device 120. For example, in the example shown in FIG. 1, the PE redundancy group includes the PE devices 130-1 and 130-2, the CE device 110 transmits traffic to the PE device 130-1 via access link 1 AN device 120-1 and EVC 1, and CE device 110 transmits traffic to the PE device 130-2 via access link 1 AN device 120-1 and EVC 2. Meanwhile, the CE device 110 transmits traffic to the PE device 130-1 via access link 2 AN device 120-2 and EVC 3, and CE device 110 transmits traffic to the PE device 130-2 via access link 2 AN device 120-2 and EVC 4.

In some embodiments, the CE device 110 receives traffic from the PE redundancy group via the AN device 120. For example, in the example shown in FIG. 1, the CE device 110 receives traffic from the PE device 130-1 via EVC 1, AN device 120-1 and access link 1, and the CE device 110 receives traffic from the PE device 130-2 via EVC 2, AN device 120-1 and access link 1. Meanwhile, the CE device 110 receives traffic from the PE device 130-1 via EVC 3, AN device 120-2 and access link 2, and the CE device 110 receives traffic from the PE device 130-2 via EVC 4, AN device 120-2 and access link 2.

As described above, the CE device 110 is connected to a plurality of AN devices (e.g., the AN devices 120-1, 120-2 as illustrated in FIG. 1) through the CE-LAG, and each of the plurality of AN devices is connected to the PE redundancy group through the AN-LAG, and a plurality of EVCs overlying the plurality of AN-LAGs of the plurality of AN devices constitute a CE-LAG vES. For example, in FIG. 1, the CE device 110 is connected to multiple AN devices 120-1 and 120-2 through the CE-LAG The AN device 120-1 is connected to the PE devices 120-1 and 120-2 through AN-LAG1, and AN device 120-2 is connected to the PE devices 120-1 and 120-2 through AN-LAG2. The PE devices 120-1 and 120-2 constitute the PE redundancy group. The four EVCs overlying the AN-LAG1 corresponding to AN device 120-1 and the AN-LAG2 corresponding to AN device 120-2 constitute the CE-LAG vES.

In some embodiments, the CE-LAG is based on corresponding multiple access links between the CE device 110 and a plurality of AN devices 120. In this way, performance and reliability of the CE-LAG can be guaranteed. For example, in the example shown in FIG. 1, the CE-LAG is based on the access link 1 and the access link 2 between the CE device 110 and the AN devices 120-1 and 120-2.

In some embodiments, the CE-LAG vES includes multiple virtual circuit EVCs between a plurality of AN devices 120 and a plurality of RG PE devices 130. In this manner, management of the multiple EVCs can be performed by managing the entire CE-LAG vES, thereby improving management efficiency of the multiple EVCs. For example, in the example shown in FIG. 1, the CE-LAG vES includes multiple EVCs (i.e., EVCs 1, 2, 3, 4 shown in FIG. 1) between the AN devices 120-1 and 120-2 and the RG PE devices 130-1 and 130-2.

In some embodiments, the multiple EVCs are implemented as a service virtual local area network (S-VLAN), and the multiple EVCs comprised in the CE-LAG vES have the same private S-VLAN ID. As such, the multiple EVCs may be used in a service virtual local area network scenario and efficiently managed using the S-VLAN IDs.

In some embodiments, the CE-LAG is assigned a globally unique CE-LAG B-MAC address. In this manner, the CE-LAG can be efficiently managed using the B-MAC.

In some embodiments, the AN device 120 receives traffic from or transmits traffic to the CE device 110 based on the CE-LAG For example, in the example shown in FIG. 1, AN device 120-1 receives traffic from or transmits traffic to CE device 110 through the CE-LAG, and AN device 120-2 receives traffic from or transmits traffic to CE device 110 through the CE-LAG

In some embodiments, the AN device 120 transmits traffic to or receives traffic from the PE redundancy group via the AN-LAG For example, in the example shown in FIG. 1, the PE redundancy group consists of the PE devices 120-1 and 120-2, the AN device 120-1 transmits/receives traffic to/from the PE devices 120-1 and 120-2 via the AN-LAG1, and the AN device 120-2 transmits/receives traffic to/from the PE devices 120-1 and 120-2 via the AN-LAG2, as described above.

As described above, the access link 1 connects the CE device 110 and the AN device 120-1, the access link 2 connects the CE device 110 and the AN device 120-2, and the access link 1 and the access link 2 constitute the CE-LAG That is, the CE-LAG connects the CE device 110 with a plurality of AN devices 120-1 and 120-2. As shown in FIG. 1, the AN-LAG1 connects the AN device 120-1 with the PE devices 120-1 and 120-2, the AN-LAG2 connects the AN device 120-2 with the PE devices 120-1 and 120-2, and a plurality of EVCs (in FIG. 1, EVC1, EVC2, EVC3, EVC4) overlying a plurality of AN-LAGs (in the example shown in FIG. 1, AN-LAG1 and AN-LAG2) corresponding to the plurality of AN devices 120-1 and 120-2 constitute the CE-LAG vES.

In some embodiments, the CE-LAG is based on corresponding multiple access links between the CE device 110 and a plurality of AN devices 120. In this way, performance and reliability of the CE-LAG can be guaranteed. For example, in the example shown in FIG. 1, the CE-LAG is based on the access link 1 and the access link 2 between the CE device 110 and the AN devices 120-1 and 120-2.

In some embodiments, the CE-LAG vES includes the multiple EVCs between the multiple AN devices 120 and the multiple RG PE devices 130. In this manner, management of the multiple EVCs can be performed by managing the entire CE-LAG vES, thereby improving management efficiency of multiple EVCs. For example, in the example shown in FIG. 1, the CE-LAG vES includes a plurality of EVCs (i.e., EVCs 1, 2, 3, 4 shown in FIG. 1) between the AN devices 120-1 and 120-2 and the RG PE devices 130-1 and 130-2.

In some embodiments, the multiple EVCs are implemented as a service virtual local area network (S-VLAN), and the multiple EVCs comprised in the CE-LAG vES have the same private S-VLAN ID. As such, multiple EVCs may be used in a service virtual local area network scenario and efficiently managed using the S-VLAN IDs.

In some embodiments, the CE-LAG vES is globally identified by the CE-LAG B-MAC address. In this manner, the CE-LAG can be efficiently managed using the B-MAC.

In the network system 100, each RG PE device 130 executes the communication method 500 shown in FIG. 5. FIG. 5 illustrates a communication method 500 implemented at a redundancy group (RG) PE device 130 according to an embodiment of the present disclosure. The RG PE device 130 can support the CE device 110 to access the PBB-EVPN service after converging through the AN device 120 in a CloudCO scenario by executing the communication method 500.

As shown in FIG. 5, in block 510, the RG PE device 130 transmits traffic to the CE device 110 via a plurality of AN devices 120. For example, in the example shown in FIG. 1, the RG PE device 130-1 transmits traffic to the CE device 110 via the EVC 1, AN device 120-1 and access link 1, and the RG PE device 130-1 transmits traffic to the CE device 110 via the EVC 3, AN device 120-2 and access link 2. Meanwhile, the RG PE device 130-2 transmits traffic to the CE device 110 via the EVC 2, AN device 120-1 and access link 1, and the RG PE device 130-2 transmits traffic to the CE device 110 via the EVC 4, AN device 120-2 and access link 2.

As shown in FIG. 5, in block 520, the RG PE device 130 transmits traffic to the CE device 110 via a plurality of AN devices 120. For example, in the example shown in FIG. 1, the RG PE device 130-1 receives traffic from the CE device 110 via the EVC 1, AN device 120-1 and access link 1, and the RG PE device 130-1 receives traffic from the CE device 110 via the EVC 2, AN device 120-2 and access link 3. Meanwhile, the RG PE device 130-2 receives traffic from the CE device 110 via the access link 1, AN device 120-1 and EVC 2, and the RG PE device 130-2 receives traffic from the CE device 110 via the EVC 2, AN device 120-2 and access link 4.

The CE device 110 is connected to a plurality of AN devices 120-1 and 120-2 through the CE-LAG, each of the multiple AN devices 120-1 and 120-2 is connected to the PE redundancy group comprising muliple PE devices 130 through a corresponding AN-LAG, respectively, and the multiple EVCs corresponding to the multiple AN-LAGs respectively corresponding to the multiple AN devices 120-1 and 120-2 constitute the CE-LAG vES. For example, in the example shown in FIG. 1, the AN device 120-1 is connected to PE devices 130-1 and 130-2 through the AN-LAG1, the AN device 120-2 is connected to the PE devices 130-1 and 130-2 through the AN-LAG2, the PE devices 130-1 and 130-2 constitute the PE redundancy group, and EVC1, EVC2, EVC3 and EVC4 overlying the AN-LAG1 and AN-LAG2 constitute the CE-LAG vES.

In some embodiments, the CE-LAG (or CE-LAG vES) has the CE-LAG B-MAC type newly defined in the present disclosure. For example, in the example shown in FIG. 1, the CE-LAG (or CE-LAG vES) are the CE-LAG B-MAC types newly defined in the present disclosure.

In some embodiments, the RG PE device 130 advertises the following EVPN routes for the CE-LAG: a B-MAC route corresponding to the CE-LAG B-MAC address; two Ethernet segment routes respectively corresponding to different Ethernet virtual circuits of the CE-LAG virtual Ethernet segments (for example, EVC1, EVC2, EVC3 and EVC4 shown in FIG. 1); two Grouping B-MAC routes respectively corresponding to the MAC addresses of different PE-AN Ethernet links (in the example shown in FIG. 1 of the present disclosure, the PE-AN first Ethernet link, the PE-AN second Ethernet link, the PE-AN third Ethernet link and the PE-AN fourth Ethernet link)underlying CE-LAG virtual Ethernet segments; and several inclusive multicast Ethernet tag routes respectively corresponding to a different backbone service instance (I-SID). In this way, the RG PE device 130 can efficiently implement various network routing functions in a PE-AN-CE aggregation connection scenario of a cloud central CloudCO in accordance with similar mechanisms of the EVPN.

In some embodiments, the B-MAC route is advertised along with the MAC Address Type Extended Community for explicitly indicating the MAC address type associated with the B-MAC route. As such, the B-MAC address type newly defined by embodiments of the present disclosure, as well as various other MAC address types, may be indicated by a MAC Address Type Extended Community, thereby precisely indicating a processing method for the advertised MAC address.

In some embodiments, the MAC Address Type Extended Community includes an explicit MAC address type to explicitly indicate a processing method related to the MAC address. For example, as shown in FIG. 2, the MAC Address Type Extended Community includes a MAC Address Type field to explicitly inform the MAC address type. For example, if the value of the MAC Address Type field is set to CE_LAG_B_MAC, then the MAC Address Type Extended Community explicitly informs that the MAC address type is the CE-LAG B-MAC address type newly defined in the present disclosure.

In some embodiments, the advertised MAC route does not comprise an explicit MAC Address Type Extended Community, in which case the MAC address type is referred to as implicit. When the PE imports a MAC address through the EVPN MAC/IP advertisement route, if the MAC address type is implicit, the importing PE shall infer the MAC address type by:

If the MAC address is to be imported into an MAC-VRF of the EVPN service, the MAC address type is a customer MAC address (C-MAC).

If the MAC address is to be imported into a B-MAC-VRF of the PBB-EVPN service, and the MPLS Label1 field of the imported EVPN MAC/IP advertisement route comprises a non-zero value, then the MAC address type is normal plain B-MAC address; otherwise (i.e., the MPLS Label1 field comprises a zero value), the MAC address type is the Grouping B-MAC address.

In this manner, in the event that the imported EVPN MAC/IP advertisement route fails to explicitly indicate the MAC address type, the PE device importing the route may also deduce the MAC address type, thereby adopting the correct processing method.

In some embodiments, the B-MAC route is advertised along with multiple Router's MAC Extended Communities corresponding to multiple EVCs to indicate that the CE-LAG B-MAC address is reachable via multiple EVCs. In this way, association between the CE-LAG B-MAC and the multiple EVCs can be efficiently advertised to other network devices.

In some embodiments, the RG PE device 130 may advertise the following Extended Communities: the MAC Address Type Extended Community, the Router's MAC Extended Community, the Route Target Extended Community, the designated forwarder (DF) Election Extended Community, and any combination thereof. As such, the RG PE device may employ similar mechanisms of the EVPN to obtain more relevant information about the MAC address through these various communities.

In some embodiments, the Route Target Extended Community includes the CE-LAG B-MAC type newly defined in the present disclosure. In this way, the newly defined CE-LAG B-MAC type can be advertised through a community advertisement mechanism, indicating that the processing method described in the present disclosure is to be applied to advertised MAC addresses. For example, in the example shown in FIG. 1, the CE-LAG B-MAC denotes the CE-LAG B-MAC type newly defined in the present disclosure. As shown in FIG. 2, the MAC Address Type Extended Community includes a "MAC Address Type" field, which when set to "CE_LAG_B_MAC" indicates that the MAC address type is the CE-LAG B-MAC type newly defined in the present disclosure.

In some embodiments, the Route Target Extended Community includes the CE-LAG (or CE-LAG vES), which is the CE-LAG B-MAC type newly defined in the present disclosure. For example, in the example shown in FIG. 1, the CE-LAG (or CE-LAG vES) is the CE-LAG B-MAC type newly defined in the present disclosure.

In some embodiments, the DF Election Extended Community includes an indication of the DF election algorithm to be adopted. For example, as previously described, the DF election algorithm is identified by the new DF Alg value DF_ALG_PBB_EVPN_CE_LAG_CCO comprised in the DF Election extended community to indicate that the DF candidate set is constructed and a DF is elected therefrom.

In some embodiments, the RG PE devices 130-1 and 130-2 advertise respective Ethernet segment routes associated with the respective connected CE-LAG vES, and the RG PE devices 130-1 and 130-2 may discover each other's IP addresses, construct the DF candidate set, and elect a DF therefrom.

In some embodiments, the Ethernet segment routes advertised by the RG PE devices 130-1 and 130-2 to each other carry a DF Election Extended Community to indicate the DF election algorithm. The RG PE devices 130-1 and 130-2 generate a DF candidate set comprising a plurality of candidate EVCs for the CE-LAG vES based on the DF Alg algorithm indicated by the DF Election Extended Community, and elects a DF for the CE-LAG vES therefrom.

In some embodiments, if one of the access links of the CE-LAG fails, the EVC associated with the failed link in the CE-LAG vES will be set to unavailable. The RG PE devices 130-1 and 130-2 re-advertise the B-MAC route for the CE-LAG and withdraw the Ethernet segment route corresponding to the unavailable EVC. The remote PE device 140 will then update the virtual Ethernet segment member Ethernet virtual circuit table accordingly, and the RG PE devices 130-1 and 130-2 will re-elect the DFs, respectively.

In some embodiments, if the RG PE device 130-1 detects a failure of the Ethernet link between itself and a certain AN device (e.g., AN device 120-1), the RG PE device 130-1 will withdraw the Grouping B-MAC address of the failed PE-AN Ethernet link. This will trigger the RG PE devices 130-1 and 130-2 to perform a DF re-election procedure on all vES associated with the failed PE-AN Ethernet link and trigger the remote PE device 140 to perform a load re-balancing procedure on all the vES associated with the failed PE-AN Ethernet link.

In some embodiments, if the source B-MAC address of the downstream traffic is the same as the CE-LAG B-MAC address, the RG PE device 130-1 should discard the downstream traffic so as to avoid the CE device 110 receiving traffic transmitted by itself.

In some embodiments, the method 500 performed by the RG PE device 130 is used to implement the PBB-EVPN service in the CloudCO scenario, thereby supporting implementation and application of PBB-EVPN technology in the CloudCO scenario.

In the network system 100, the remote PE device 140 performs the communication method 600 shown in FIG. 6. FIG. 6 illustrates the communication method 600 implemented at the remote PE device 140 in accordance with an embodiment of the present disclosure. The remote PE device 140 can support the CE device 110 to access the PBB-EVPN service after converging through the AN device 120 in the CloudCO scenario by executing the communication method 600.

As shown in FIG. 6, in block 610, the vES member EVC table is generated at the remote PE device 140, wherein the vES comprises a plurality of EVCs associated with the plurality of AN-LAGs of the plurality of AN devices 120, and each AN-LAG connects a corresponding AN device and the PE redundancy group, and each PE redundancy group comprises the two RG PE devices 130. Multiple CE devices 110 are connected to the one or the pair of AN devices 120 by means of single homing, dual homing single active, or dual homing dual active (i.e., CE-LAG), respectively. The vES member EVC table records at least a vES identifier and type (i.e., A vES B-MAC address and type), a respective identifier of the associated RG PE device, and a respective identifier of the associated EVC. For example, in the example shown in FIG. 1, the CE-LAG vES includes the EVCs 1 and 2 associated with the AN-LAG 1 of the AN device 120-1 as well as the EVCs 3 and 4 associated with the AN-LAG 2 of the AN device 120-2, the AN-LAG1 connects the AN device 120-1 to the RG PEs 130-1 and 130-2, and the AN-LAG2 connects the AN device 120-2 and the RG PEs 130-1 and 130-2. The RG PE 130-1 and 130-2 constitute the PE redundancy group, and the AN devices 120-1 and 120-2 are connected to the CE device 110 via the CE-LAG The vES member EVC table records at least the B-MAC address and type of the CE-LAG vES, the respective identifier of the associated RG PE device 130, and the respective identifier of the associated EVC.

As shown in FIG. 6, in block 620, the vES member EVC table is updated at the remote PE device 140 based on a CE-LAG vES topology change. For example, if the vES topology changes (e.g., the EVC 1 or any other EVC included in the CE-LAG vES become unavailable), the remote PE device updates the vES member EVC table to reflect the changed CE-LAG vES topology.

In some embodiments, the identifier of the CE-LAG vES may comprise a CE-LAG vES B-MAC address, the identifier of the RG PE device 130 may comprise a 4/16-octet IPv4/v6 address, and the EVC identifier (i.e., EVC ID) is numerically equal to the MAC address of the PE-AN Ethernet link underlying the EVC. In this manner, the identifiers of the respective management elements are implemented in an optimized manner, thereby improving management efficiency of the network system and reducing management cost of the network system.

In some embodiments, the vES member EVC table may also record the CE-LAG vES B-MAC type. As such, the vES member EVC table may record more comprehensive information about the CE-LAG vES B-MAC, thus may provide more possibilities for manage operations.

In some embodiments, the remote PE device 140 may perform load balancing among the multiple RG PE devices 130 based on the vES member EVC table to optimize traffic distribution in the network system and improve robustness of the network system.

In some embodiments, during updation of the vES member EVC table, if the B-MAC route advertised with the MAC Address Type Extended Community and the Router's MAC Extended Community is imported, the remote PE device 140 may determine the identifier of the CE-LAG vES (i.e., the advertised B-MAC address), the identifier of the RG PE device 130, and the identifier of the EVC (i.e., the Router's MAC). Based on the identifier of the CE-LAG vES, the identifier of the RG PE device 130 and the identifier of the EVC, the remote PE device 140 may update the vES member EVC table. In this manner, the vES member EVC table can continually record new entries, thereby effectively managing the vES and the EVC thereof.

In some embodiments, if the remote PE device 140 receives the Grouping B-MAC route withdrawal message, all the EVC identifiers numerically equal to the withdrawn Grouping B-MAC address are expired and the remote PE device 140 will remove all such expired EVC identifiers from the vES member EVC table. In this manner, the remote PE device 140 can quickly update the vES member EVC table to support the fast convergence.

In some embodiments, if the vES member EVC table is updated, the remote PE device 140 may perform load balancing among the RG PE devices 130 based on the updated vES member EVC table. In this way, load balancing can be performed based on a more accurate vES member EVC table, thereby improving the performance of load balancing.

In some embodiments, the remote PE device 140 may determine a plurality of EVC numbers respectively corresponding to the plurality of RG PE devices 130, and each of the plurality of EVC numbers indicates the number of EVCs the corresponding RG PE device 130 of the plurality of RG PE devices 130 has. The remote PE device 140 may then perform load balancing among the plurality of RG PE devices 130 based on the plurality of EVCs. As such, load balancing may be performed based on the number of EVCs for each PE device, thereby improving effectiveness of load balancing.

In some embodiments, the remote PE device 140 may receive failure information from the RG PE device 130 of the plurality of RG PE devices 130, and the failure information indicates that the Ethernet link between the RG PE device 130 and the AN device 120 of the plurality of AN devices 120 has failed. If it is determined that the CE-LAG vES includes an invalid EVC associated with the failed Ethernet link, the remote PE device 140 may delete the entry corresponding to the invalid EVC from the vES member EVC table. The remote PE device 140 may then perform load re-balancing for the CE-LAG vES based on the updated vES member EVC table. In this manner, the vES member EVC table may delete invalid entries due to the Ethernet link failures, thereby effectively managing the EVCs included in the vES and improving effectiveness of load balancing.

In some embodiments, the communication method 600 performed by the remote PE device 140 may be used to implement the PBB-EVPN service in the CloudCO scenario, thereby improving and optimizing implementation and application of the PBB-EVPN technology in the CloudCO scenario.

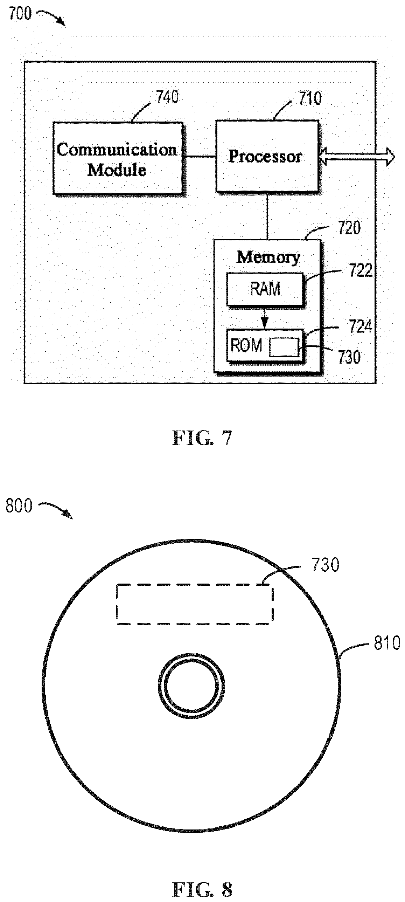

FIG. 7 illustrates a simplified block diagram of a device 700 suitable for implementing an embodiment of the present disclosure. The device 700 may be provided to implement a communication device, such as the RG PE device 130 and the remote PE device 140 as shown in FIG. 1. As shown in FIG. 7, the device 700 includes one or more processors 710, one or more memories 720 coupled to the processor(s) 710, and one or more communication modules 740 coupled to the processor(s) 710.

The communication module 740 is used for two-way communication, e.g., the communication module 740 may include an Ethernet link, a fiber optic link, a transmitter, a receiver, or a transceiver for implementing embodiments of the present disclosure. A communication interface may represent any interface necessary to communicate with other network elements.

The processor(s) 710 may be of any type suitable for the local technology network and may include, but is not limited to, one or more of a general purpose computer, a special purpose computer, a micro-controller, a digital signal controller (DSP), and a controller-based multi-core controller architecture. The device 700 may have multiple processors, such as application specific integrated circuit chips, temporally slaved to a clock synchronized with a main processor.

The memory(ies) 720 may include one or more non-volatile memories and one or more volatile memories. Examples of non-volatile memory include, but are not limited to, read-only memory (ROM) 924, erasable programmable read-only memory (EPROM), flash memory, a hard disk, a compact disk (CD), a digital video disk (DVD), and other magnetic and/or optical storage. Examples of volatile memory include, but are not limited to, random access memory (RAM) 722 and other volatile memory that does not persist for the duration of the power down.

A computer program or instructions 730 comprise computer-executable instructions that are executed by the associated processor(s) 710. The program or instructions 730 may be stored in ROM 724. The processor(s) 710 may perform any suitable actions and processes by loading the program or instructions 730 into RAM 722.

Embodiments of the present disclosure may be implemented with the program or instructions 730 such that the device 700 may perform any of the processes of the present disclosure as discussed with reference to FIG. 5 or FIG. 6. Embodiments of the present disclosure may also be implemented by hardware or by a combination of software and hardware.

In some embodiments, the program or instructions 730 may be tangibly embodied in a computer-readable medium that may be included in device 700 (such as in memory(ies) 720) or other storage device accessible by device 700. The program or instructions 730 may be loaded from a computer-readable medium into RAM 722 for execution. The computer readable medium may include any type of tangible non-volatile memory, such as ROM, EPROM, flash memory, hard disk, CD, DVD, etc.

FIG. 8 illustrates an example of a computer readable medium 800 in the form of a CD or DVD. The computer readable medium has stored thereon the program or instructions 730. In some embodiments, a computer-readable medium 800 is provided having stored thereon the program or instructions 730 which, when executed by at least one processing unit, causes the at least one processing unit to be configured to perform the method 500 as shown in FIG. 5.

In some embodiments, a computer-readable medium 800 is provided having stored thereon the program or instructions 730 which, when executed by at least one processing unit, causes the at least one processing unit to be configured to perform the method 600 as shown in FIG. 6.

In some embodiments, the network system 100 for implementing a PBB-EVPN service in an CloudCO scenario is provided. The network system 100 comprises: an RG PE device 130 according to one or more embodiments of the present disclosure; a remote PE devices 140 according to one or more embodiments of the present disclosure; an AN devices 120 according to one or more embodiments of the present disclosure; and a CE devices 110 according to one or more embodiments of the present disclosure. Each remote PE device 140 is connected in a downstream direction to the RG PE device 130 through the CloudCO network and in an upstream direction to a network or service gateway 150.

In general, the various embodiments of the disclosure may be implemented in hardware or special purpose circuits, software, logic or any combination thereof. Some aspects may be implemented in hardware, while other aspects may be implemented in firmware or software which may be executed by a controller, micro-processor or other computing device. While various aspects of the embodiments of the present disclosure are shown and described as block diagrams, flow charts, or using some other pictorial representation, it is well understood that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer-readable storage medium. The computer program product comprises computer executable instructions, e.g., instructions comprised in a program module, to be executed in a device on a object real or virtual processor to perform the method 300 as described above with reference to FIG. 3, the method 500 as described in FIG. 5 or the method 600 as described in FIG. 6. Generally, program modules include routines, programs, libraries, objects, classes, components, data structures, etc. which perform particular tasks or implement particular abstract data types. In various embodiments, the functionality of the program modules may be combined or partitioned between program modules as desired. Machine-executable instructions for program modules may be executed in local or distributed devices. In a distributed device, program modules may be located in both local and remote storage media.

A computer program code for implementing methods of the present disclosure may be written in one or more programming languages. These computer program codes may be provided to a processor of a general purpose computer, special purpose computer, or other programmable data processing apparatus, such that the program codes, when executed by the computer or other programmable data processing apparatus, cause the functions/operations specified in the flowchart(s) and/or block diagram(s) to be performed. The program code may be executed entirely on the computer, partly on the computer, as a stand-alone software package, partly on the computer and partly on a remote computer or entirely on the remote computer or server.

In the context of the present disclosure, computer program code or related data may be stored on any suitable medium to enable a device, apparatus or processor to perform the various processes and operations described above. Examples of the carrier include a signal, a computer readable medium, etc. Examples of signals may include electrical, optical, radio, acoustical or other forms of propagated signals, such as carrier waves, infrared signals, etc.

A computer-readable medium can be any tangible medium that can comprise or store a program for or with respect to an instruction execution system, apparatus, or device. The computer-readable medium may be a computer-readable signal medium or a computer-readable storage medium. The computer-readable medium can include, but is not limited to, an electronic, magnetic, optical, electromagnetic, infrared, or semiconductor system, apparatus, or device, or any suitable combination thereof. More detailed examples of a computer-readable storage medium include an electrical connection with one or more wires, a portable computer diskette, a hard disk, a random access memory (RAM), a read-only memory (ROM), an erasable programmable read-only memory (EPROM or Flash memory), an optical storage device, a magnetic storage device, or any suitable combination thereof.

Moreover, while the operations of the disclosed methods are depicted in the drawings in a particular order, this does not require or imply that the operations must be performed in the particular order, or that all illustrated operations must be performed, to achieve desirable results. Rather, the steps depicted in the flowcharts may change order of execution. Additionally or alternatively, certain steps may be omitted, multiple steps may be combined into one step execution, and/or one step may be decomposed into multiple step executions. It should also be noted that the features and functions of two or more apparatuses according to the present disclosure may be embodied in one apparatus. Conversely, the features and functions of one apparatus described above may be further divided into embodiments that are embodied by multiple apparatuses.

While the present disclosure has been described with reference to several particular embodiments, it should be understood that the present disclosure is not limited to the particular embodiments disclosed. The present disclosure is intended to cover various modifications and equivalent arrangements included within the spirit and scope of the appended claims.

## Claims

1. A multi-chassis redundancy access protection method for a PBB-EVPN service, comprising:
configuring (310) a multi-chassis redundancy access mode for a PBB-EVPN service;
wherein the multi-chassis redundancy access mode is applicable to a scenario where a CE device is multihomed to two or more access node, AN, devices (120-1, 120-2) of a cloud central office, CloudCO, via a multi-chassis link aggregation group, CE-LAG, and the two or more AN devices (120-1, 120-2) are respectively dualhomed to a same pair of redundant PE devices (a first PE).

2. A method for explicitly indicating a MAC address type advertised by an EVPN route, comprising: newly defining an EVPN MAC Address Type Extended Community (200), wherein
in the multi-chassis redundancy access mode of the PBB-EVPN service as claimed in claim 1, traffic of the CE-LAG is evenly carried on all relevant PE-AN Ethernet links via a group of dedicated Ethernet virtual circuits which constitute a virtual Ethernet segment bearing traffic of the CE-LAG;
a CE-LAG and a virtual Ethernet segment thereof is identified by a B-MAC address (a CE-LAG B-MAC address);
the EVPN MAC Address Type Extended Community (200) is used for precisely indicating a remote PE (a second PE) device to process the traffic of the CE-LAG using the multi-chassis redundancy access protection method for a PBB-EVPN service as claimed in claim 1.

3. The method of claim 1 or 2, wherein the method comprises:
in the PBB-EVPN service multi-chassis redundancy access mode, a first PE device advertising the following EVPN routes for a CE-LAG:
a B-MAC route corresponding to the CE-LAG B-MAC address;
two Ethernet Segment routes corresponding to different Ethernet virtual circuits of a CE-LAG virtual Ethernet Segment respectively;
two Grouping B-MAC routes respectively corresponding to MAC addresses of different PE-AN Ethernet links underlying the CE-LAG virtual Ethernet segment;
several Inclusive Multicast Ethernet Tag routes respectively corresponding to different backbone service instance identities, I-SID.

4. The method of claim 1 or 2, wherein the method comprises:
maintaining, by a remote PE device locally, a virtual Ethernet segment Ethernet member virtual circuit table, in order to track PE IP addresses of all the virtual Ethernet segments and Ethernet virtual circuit identifiers; wherein
each entry of the virtual Ethernet segment member Ethernet virtual circuit table comprises the following information:
a virtual Ethernet segment B-MAC address;
a virtual Ethernet segment B-MAC type;
a PE IP address 1 and a list of active Ethernet virtual circuits that the virtual Ethernet segment is connected to the redundant PE;
a PE IP address 2 and a list of active Ethernet virtual circuits that the virtual Ethernet segment is connected to the redundant PE,
the PE IP address 1 and the PE IP address 2 respectively identifies a pair of redundant PEs connected to the virtual Ethernet segment; the Ethernet virtual circuit identifier is numerically equal to the MAC address of the PE-AN Ethernet link underlying the Ethernet virtual circuit.

5. The method according to claim 4, wherein a virtual Ethernet segment member Ethernet virtual circuit table is updated by a remote PE device based on a received B-MAC route advertisement message and a Grouping B-MAC route withdrawal message,
the B-MAC route is advertised along with the MAC Address Type Extended Community (200) and one or two Router's MAC Extended Community.

6. The method according to claim 4, traffic transmitted from a remote PE to a B-MAC virtual Ethernet segment is load-balanced between a pair of redundant PE devices that can reach the B-MAC,
wherein a remote PE derives a load balancing weight of traffic of a B-MAC virtual Ethernet segment in each redundant PE device from a virtual Ethernet segment member Ethernet virtual circuit table, and
wherein a load balancing weight of traffic of a B-MAC virtual Ethernet segment in a redundant PE device is equal to a ratio of the number of active Ethernet virtual circuits connected to the PE device by the virtual Ethernet segment to the number of all active Ethernet virtual circuits connected to all redundant PE devices.

7. The method according to claim 1 or 2, wherein for a redundant PE device connected to the same virtual Ethernet segment, the method further comprises:
discovering other redundant PE devices connected to the same virtual Ethernet segment by transmitting and receiving an EVPN Ethernet segment route, and electing a delegated forwarder, DF.

8. The method according to claim 7, wherein:
a Ethernet segment identifier field of EVPN Ethernet segment routing is encoded as type 3 ESI, the upper 6 octets of an ESI value comprises an Ethernet virtual circuit identifier of a CE-LAG virtual Ethernet segment and is numerically equal to an MAC address of a PE-AN Ethernet link underlying the Ethernet virtual circuit; the lower 3 octets of an ESI value are padded with zeros,
each EVPN Ethernet segment route is transmitted along with an ES-Import Route Target Extended Community, a DF Election Extended Community and a Router's MAC Extended Community,
the ES-Import Route Target Extended Community comprises a CE-LAG B-MAC address; the DF Election Extended Community comprises a new DF Alg value to indicate adoption of a new DF candidate set construction and election algorithm.

9. The method according to claim 8, further comprising:
based on all EVPN Ethernet segment routes related to the CE-LAG B-MAC virtual Ethernet segment, adopting a new DF candidate set construction and election algorithm designated by a DF Alg value of a DF Election Extended Community, wherein the DF candidate set comprises four Ethernet virtual circuit identifiers with the numerical value of a PE-AN Ethernet link MAC address.

10. The method according to claim 1, further comprising:
if a CE-LAG access link between a CE device and an AN device fails, or a PE-AN Ethernet link between an AN device and a PE device fails, re-announcing a B-MAC route corresponding to the failed CE-LAG or withdrawing a Grouping B-MAC route corresponding to the failed PE-AN link, by a PE device, to trigger a re-convergence procedure.

11. A multi-chassis access protection apparatus (400) for a PBB-EVPN service, comprising:
an apparatus (410) for configuring (310) a multi-chassis redundancy access mode for a PBB-EVPN service;
wherein the multi-chassis redundancy access mode is applicable to a scenario where a CE device is multihomed to two or more access node, AN, devices (120-1, 120-2) of a cloud central office, CloudCO, via a multi-chassis link aggregation group, CE-LAG, and the two or more AN devices (120-1, 120-2) are respectively dualhomed to a same pair of redundant PE devices.

12. APE device for multi-chassis access protection for a PBB-EVPN service, wherein the PE device comprises a processor (710) and a memory (720) storing a computer program (730) thereon, the computer program (730), when executed by the processor (710), implements the following steps:
configuring a multi-chassis redundancy access mode for a PBB-EVPN service;
wherein the multi-chassis redundancy access mode is applicable to a scenario where a CE device is multihomed to two or more access node, AN, devices (120-1, 120-2) of a cloud central office, CloudCO, via a multi-chassis link aggregation group, CE-LAG, and the two or more AN devices are respectively dualhomed to a same pair of redundant PE devices.

13. A computer-readable storage medium (800) storing a computer program (730) thereon, wherein the computer program (730) is used for a PE device for multi-chassis access protection for a PBB-EVPN service;
when the computer program (730) is executed by a PE device, the following steps are implemented:
configuring a multi-chassis redundancy access mode for a PBB-EVPN service;
wherein the multi-chassis redundancy access mode is applicable to a scenario where a CE device is multihomed to two or more access node, AN, devices (120-1, 120-2) of a cloud central office, CloudCO, via a multi-chassis link aggregation group, CE-LAG, and the two or more AN devices (120-1, 120-2) are respectively dualhomed to a same pair of redundant PE devices.
